# DEMANDE DE BREVET EUROPEEN

(11) **EP 4 737 427 A1**
(43) Date de publication de la demande: **06.05.2026**
(21) Numéro de dépôt: 24210392.7
(22) Date de dépôt: 01.11.2024
(51) Int. Cl.: C04B 35/111, C04B 35/117, C04B 35/119, C04B 35/486, C04B 35/488, C04B 35/575, C04B 35/581, C04B 35/583, C04B 35/593, C04B 35/645, G04B 37/22, G04B 39/00

(54) **PROCÉDÉ POUR LA FABRICATION D'UNE PIÈCE EN CÉRAMIQUE TECHNIQUE**

(71) Demandeur: Manufacture d'Horlogerie Audemars Piguet SA, 1348 Le Brassus (CH)
(72) Inventeur: Le Loarer, Thibaut, 74270 Chavannaz (FR); Métailler, Vincent, 2300 La Chaux-de-Fonds (CH)
(74) Mandataire: P&TS SA (AG, Ltd.)

(57) **Abrégé**

La présente invention concerne un procédé pour la fabrication d'une pièce en céramique technique (10), comportant les étapes suivantes : i) une étape (S1) consistant à déposer dans un moule (M) une composition à base d'au moins une poudre de céramique (P1 ; P2....Pn) et d'au moins un oxyde métallique en poudre; ii) une étape (S2) consistant à réaliser un premier cycle de frittage SPS permettant d'obtenir une préforme (PF) d'une densité inférieure à une densité finale de la pièce en céramique technique (10) pour faciliter un usinage subséquent de ladite préforme (PF) ; iii) une étape (S3) consistant à réaliser au moins une opération d'usinage de la préforme (PF) afin d'obtenir une ébauche (E) ; iv) une étape (S4) consistant à placer dans ledit moule (M) l'ébauche (E) et à l'entourer d'une poudre sacrificielle (PS) jusqu'à combler tout espace vide au sein du moule ; v) une étape (S5) consistant à réaliser un second cycle de frittage SPS permettant d'obtenir l'ébauche (E) avec ladite densité finale, et vi) une étape (S7) consistant à rectifier l'ébauche (E) de densité finale afin d'obtenir ladite pièce en céramique technique (10) aux dimensions finales. La composition de la poudre sacrificielle (PS) est choisie afin de ne pas adhérer à l'ébauche (E) au cours du second cycle de frittage.

## Description

### Domaine technique

La présente invention concerne un procédé pour la fabrication d'une pièce en céramique technique, notamment un composant d'habillage dans le domaine de l'horlogerie, en particulier une carrure de montre.

### Etat de la technique

Les procédés utilisant notamment une opération de frittage d'une composition à base d'une poudre de céramique pour la fabrication de composants horlogers en céramique sont bien connus. L'obtention d'une carrure de montre nécessitant une étape de frittage est par exemple décrit dans la publication CH718069. Les procédés utilisant une opération de frittage de type SPS pour la fabrication de composants horlogers sont aussi connus, un exemple étant décrit dans la publication EP4080293.

Les pièces en céramique frittées par SPS sont généralement usinées dans de la matière densifiée, dont la dureté complique les opérations d'usinage afin d'obtenir les dimensions finales de la pièce. Il est connu de réaliser une ébauche d'une pièce en céramique par impression 3D, dont les dimensions sont proches de la forme finale de la pièce. L'impression 3D est typiquement réalisée par stéréolithographie (SLA) ou par « binder jetting ». La pièce obtenue par SLA ou par « Binder jetting » est ensuite soumise à un procédé de frittage SPS afin de densifier la pièce en céramique pour obtenir les propriétés mécaniques souhaitées.

Le procédé susvisé implique une étape et une technologie particulière et supplémentaire qui ont le désavantage de compliquer la mise en oeuvre du procédé et d'augmenter les coûts de production.

Il est également connu d'utiliser une composition à base d'une poudre de céramique mélangée à un liant puis d'effectuer une opération de pré-frittage selon un procédé de frittage conventionnel permettant ainsi la réalisation d'un cru qui est facilement usinable. Il est toutefois nécessaire de réaliser une opération de déliantage puis une opération de frittage finale après l'usinage de la pièce. Le volume de la pièce est par conséquent réduit suite à la densification de la composition et à la perte de liant. La réduction volumétrique est typiquement comprise entre 10 et 25% du volume de la pièce crue, à savoir du volume de la pièce avant qu'elle ait subit les opérations de déliantage et de frittage. Cela implique de connaître avec précision cette réduction de volume dans les différentes directions afin d'obtenir après frittage une pièce finale aux dimensions souhaitées.

Par ailleurs, les procédés de frittage conventionnels, caractérisés par des températures uniformes et souvent très élevées combinées à une durée prolongée dans ces conditions, favorisent la diffusion des éléments chimiques d'une zone à une autre. Cela peut provoquer des réactions chimiques indésirables entre les pigments des différentes zones colorées, compromettant ainsi la séparation nette entre celles-ci.

Ce procédé a en outre l'inconvénient d'être complexe à mettre en oeuvre puisqu'il comporte de nombreuses étapes, notamment la préparation d'une composition à base de poudre de céramique, d'un liant et d'un agent stabilisant ainsi qu'une étape de déliantage. La complexité de ce procédé a par conséquent un impact non négligeable sur le coût des pièces produites.

### Bref résumé de l'invention

Un but de la présente invention est par conséquent de proposer un procédé pour la fabrication d'une pièce en céramique technique, notamment un composant horloger tel qu'une carrure de montre, dont la mise en oeuvre est simplifiée par rapport à l'art antérieur susvisé.

Un autre but de la présente invention est de proposer un procédé pour la fabrication d'une pièce en céramique technique, notamment un composant horloger tel qu'une carrure de montre, présentant une démarcation nette entre des zones de différentes couleurs.

L'objet de la présente invention vise à atteindre au moins l'un de ces buts par un procédé pour la fabrication d'une pièce en céramique technique, comportant les étapes suivantes : i) une étape consistant à déposer dans un moule une composition à base d'au moins une poudre de céramique et d'au moins un oxyde métallique en poudre; ii) une étape consistant à réaliser un premier cycle de frittage SPS permettant d'obtenir une préforme d'une densité inférieure à une densité finale de la pièce en céramique technique pour faciliter un usinage subséquent de ladite préforme ; iii) une étape consistant à réaliser au moins une opération d'usinage de la préforme afin d'obtenir une ébauche; iv) une étape consistant à placer dans le moule l'ébauche et à l'entourer d'une poudre sacrificielle jusqu'à combler tout espace vide au sein du moule ; v) une étape consistant à réaliser un second cycle de frittage SPS permettant d'obtenir l'ébauche avec ladite densité finale, et vi) une étape consistant à rectifier l'ébauche de densité finale afin d'obtenir ladite pièce en céramique technique aux dimensions finales. La composition de la poudre sacrificielle est choisie afin de ne pas adhérer à la pièce usinée au cours du second cycle de frittage.

Selon une forme de réalisation, l'ébauche avant le second cycle de frittage SPS est au plus un cinquième, de préférence un dixième, voire un vingtième de fois plus volumineuse que la pièce en céramique technique aux dimensions finales.

Selon une forme de réalisation, la préforme obtenue après le premier cycle de frittage comporte une porosité comprise dans une plage allant de 25 à 50%, de préférence de 45 à 50%.

Selon une forme de réalisation, la composition comporte un ou plusieurs oxydes sélectionnés parmi l'oxyde de fer, l'oxyde d'aluminium, l'oxyde de bismuth, l'oxyde de cuivre, l'oxyde de cérium, l'oxyde de zinc, l'oxyde de titane, l'oxyde de manganèse, l'oxyde de cobalt, l'oxyde de nickel, l'oxyde de chrome, l'oxyde d'europium, l'oxyde d'étain, l'oxyde de silicium, l'oxyde de vanadium, l'oxyde de néodyme, l'oxyde de praséodyme, l'oxyde d'hafnium, l'oxyde de calcium et l'oxyde d'yttrium, ou au moins une quelconque combinaison de ces oxydes.

Selon une forme de réalisation, la préforme obtenue après le premier cycle de frittage comporte une densité comprise dans une plage allant de 3 à 6 g/cm³, de préférence de 4 à 6 g/cm³ ou de 3 à 3.3 g/cm³.

Selon une forme de réalisation, la poudre sacrificielle possède une température de frittage au moins supérieure de 100°C par rapport à la température de frittage moyenne de ladite composition.

Selon une forme de réalisation, l'ébauche est placée dans le moule sur une première couche de poudre sacrificielle et est totalement recouverte d'une seconde couche de poudre sacrificielle.

Selon une forme de réalisation, chacune des première et seconde couches a une épaisseur comprise entre 0.5 et 5mm, de préférence entre 1 et 2mm.

Selon une forme de réalisation, la poudre sacrificielle est choisie parmi l'oxyde d'alumine, la silice amorphe ou une combinaison d'oxyde d'alumine et de silice amorphe, ou encore d'une poudre réfractaire dont la température de frittage se situe au-delà des 2000°C.

Selon une forme de réalisation, la composition déposée dans le moule forme un arrangement inhomogène de poudres.

Selon une forme de réalisation, l'ébauche de densité finale subit en outre une étape visant à réaliser une ou plusieurs opérations marginales d'usinage complémentaires.

Selon une forme de réalisation, l'étape consistant à rectifier l'ébauche est réalisée par meulage, par outils diamantés, par laser et/ou par jet d'eau.

Selon une forme de réalisation, le procédé comporte en outre une étape de réoxydation de l'ébauche réalisée entre l'étape consistant à réaliser le second cycle de frittage et l'étape de rectification ou après ladite étape de rectification.

Un autre aspect de l'invention porte sur un composant horloger, notamment d'habillage tel qu'une carrure, une lunette, un bracelet ou un fond, obtenu par le procédé selon l'une des formes de réalisation susvisées ainsi que sur une pièce d'horlogerie comprenant le composant horloger.

### Brève description des figures

Des exemples de mise en oeuvre de l'invention sont indiqués dans la description illustrée par les figures annexées dans lesquelles :
- les figures 1a et 1b illustrent les étapes principales du procédé de fabrication d'une carrure d'une boite de montre, selon une forme de réalisation,
- la figure 2 illustre schématiquement une presse SPS avec la chambre de frittage, et
- les figures 3 à 5 illustrent des dispositions de plusieurs poudres à base de céramique de composition différente dans le moule selon différents arrangements.

### Exemples de modes de réalisation de l'invention

La description qui suit s'attache à décrire un procédé de fabrication d'une carrure de montre selon différentes formes de réalisation. Bien entendu, l'homme du métier pourra mettre en oeuvre le même procédé pour la fabrication d'autres pièces en céramique dans le domaine de l'horlogerie sans sortir du cadre de l'invention.

L'une des particularités de ce procédé consiste à réaliser deux cycles de frittages SPS ainsi qu'une opération d'usinage réalisée entre les deux cycles de frittage. L'opération d'usinage est réalisée afin d'obtenir une ébauche dont les dimensions et la forme sont proches du composant final en céramique technique selon la description qui en sera faite ultérieurement.

Les paramètres du premier cycle de frittage SPS sont déterminés afin d'obtenir une préforme possédant une densité inférieure à une densité finale de la pièce en céramique technique afin de faciliter un usinage subséquent. La densité de la préforme doit toutefois être supérieure à un seuil prédéterminé afin de lui conférer une tenue mécanique suffisante pour qu'elle puisse résister aux contraintes importantes occasionnées au cours de l'opération d'usinage afin d'éviter qu'elle ne s'effrite ou se fissure. Les paramètres du second cycle de frittage SPS sont, quant à eux, déterminés afin de conférer à la pièce finale en céramique les propriétés mécaniques souhaitées.

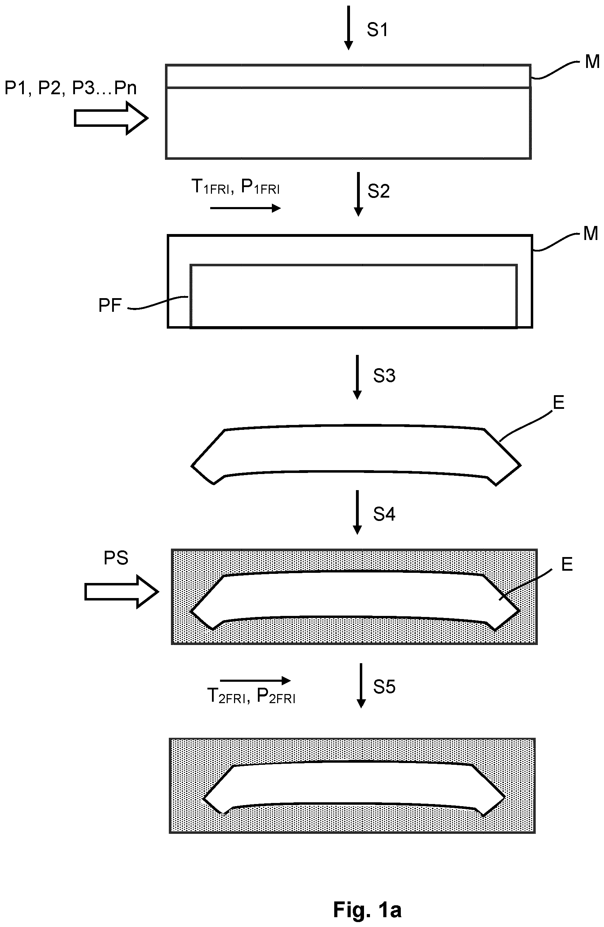

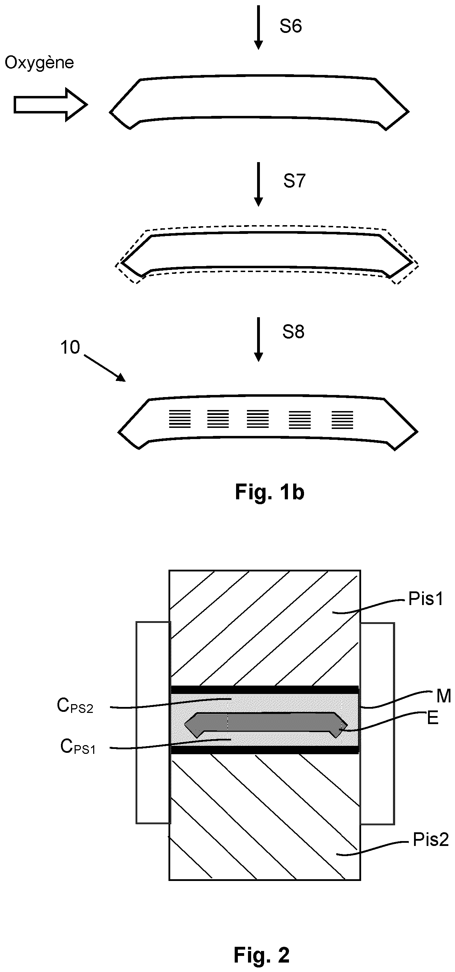

De manière générale, et en référence à la figure 1 qui illustre une forme de réalisation non-limitative, le procédé pour la fabrication d'une carrure de montre comporte une première étape S1 qui vise à disposer dans un moule ou une matrice M, typiquement en graphite, une composition à base d'au moins une poudre de céramique P1... Pn et comprenant en outre au moins un oxyde métallique sous forme de poudre, de préférence au moins deux oxydes métalliques de type différent, chaque oxyde ayant une certaine teneur, par exemple entre 10% et 20% de la composition.

Une composition à base de différentes poudres de céramique et d'oxydes métalliques peut être déposée dans le moule selon différents arrangements qui seront décrits ci-après à titre non limitatif. On définira la composition comme étant un ensemble de poudres dans lequel cet ensemble, est d'une part constitué d'au moins une poudre de céramique et d'au moins un oxyde métallique en poudre et, est d'autre part disposé dans un moule selon un arrangement particulier de ces poudres entre-elles.

Chaque poudre de céramique P1, P2, P3 peut par exemple être choisie parmi une poudre à base d'alumine, de zircone, de carbure de silicium, de nitrure de silicium, de nitrure de bore et de nitrure d'aluminium.

Selon une alternative, au moins une des poudres de céramique est un composite choisi parmi les trois composites suivants : Zircone à matrice d'alumine (ZTA), Alumine à matrice Zircone (ATZ) et Zircone stabilisée au moins partiellement à l'Yttrium (Y-TZP).

Selon une autre alternative, au moins une des poudres de céramique est composée d'un mélange de Zircone à matrice d'alumine (ZTA), d'Alumine à matrice de Zircone (ATZ), et de Zircone stabilisée au moins partiellement à l'Yttrium (Y-TZP).

L'oxyde métallique peut par exemple être sélectionné notamment parmi l'oxyde de fer, l'oxyde d'aluminium, l'oxyde de bismuth, l'oxyde de cuivre, l'oxyde de cérium, l'oxyde de zinc, l'oxyde de titane, l'oxyde de manganèse, l'oxyde de cobalt, l'oxyde de nickel, l'oxyde de chrome, l'oxyde d'europium, l'oxyde d'étain, l'oxyde de silicium, l'oxyde de vanadium, l'oxyde de néodyme, l'oxyde de praséodyme, l'oxyde d'hafnium, l'oxyde de calcium et l'oxyde d'yttrium, ou au moins une quelconque combinaison de ces oxydes. Au moins une quelconque combinaison réalisée à partir d'au moins deux de ces oxydes est également envisageable.

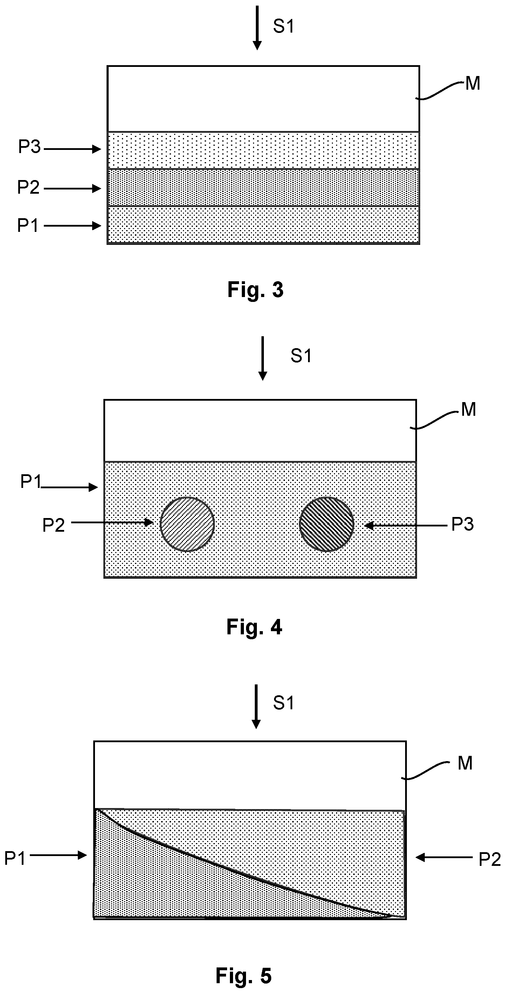

A titre d'exemple, plusieurs poudres à base de céramiques P1, P2, P3 de différentes natures peuvent être disposées de manière séquentielle dans le moule M couche par couche de sorte à ne pas être mélangées selon l'exemple illustré par la figure 3.

Alternativement, une première poudre principale à base de céramique P1 peut être disposée dans le moule M, alors que d'autres poudres P2, P3 à base de céramiques de natures différentes sous forme d'amas sont noyées dans la poudre principale comme illustré schématiquement par la figure 4.

Selon la forme de réalisation illustrée par la figure 5, au moins deux poudres P1, P2 à base de céramiques de natures différentes sont réparties dans le moule M afin d'obtenir un assemblage de poudre non-mélangées. Les deux poudres peuvent par exemple être réparties de sorte à présenter une inclinaison ou des formes, quelconques ou prédéfinies, complémentaires afin de former une interface sans gradient (ou quasi-nul) de concentration entre les deux poudres P1, P2.

En fonction des besoins, d'autres arrangements de différentes poudres à base de céramique peuvent être mis en oeuvre, par exemple des arrangements aléatoires ou pour former des figures géométriques.

Selon la figure 1, la première étape S1, consistant à remplir le moule M de différentes poudres de céramique selon différents arrangements, est suivie d'une étape S2 consistant à réaliser un premier cycle de frittage SPS (*Spark Plasma Sintering*) afin d'obtenir une préforme PF de la carrure.

Le frittage SPS est un procédé qui s'apparente au pressage isostatique à chaud mais qui utilise l'effet joule pour chauffer une poudre pré-compactée dans un moule entre deux électrodes en graphite sous atmosphère inerte ou sous vide. La chambre de frittage SPS comporte le moule comprenant la poudre pré-compactée qui est soumise à une pression de plusieurs mégapascals sous l'action de pistons. Un courant continu ou alternatif de plusieurs kiloampères, pulsé ou non, est appliqué entre les électrodes avec une tension de quelques volts, ce qui permet de réaliser une densification bien plus rapide de la poudre pré-compactée que les procédés de frittage conventionnels.

Les paramètres du premier cycle de frittage SPS sont déterminés pour que la préforme PF obtenue présente une tenue mécanique suffisante pour pouvoir effectuer une ou plusieurs des opérations d'usinage selon l'étape S3, décrite ci-après, afin d'obtenir une ébauche E de forme prédéterminée. La tenue mécanique suffisante dans le contexte de la présente invention est obtenue pour une céramique à base de zircone stabilisé ayant une ou plusieurs des propriétés suivantes : densité :de 3 à 6 g/cm³, de préférence de 4 à 6 g/cm³ ou de 3 à 3.3 g/cm³, porosité : de 45 à 50%, résistance à la rupture : de 50 à 90 Mpa.

Selon l'exemple illustré, la carrure est réalisée à partir d'une composition à base de zircone stabilisée afin que la préforme PF soit de forme cylindrique avec un diamètre qui peut varier entre 40mm et 60mm, par exemple sensiblement égal à 50mm et dont l'épaisseur est comprise entre 15 et 20mm, par exemple 18mm.

Le premier cycle de frittage S2 peut comprendre notamment les paramètres suivants :
- profil de montée en température situé entre 100°C/min et 150°C/min jusqu'à une température cible T_{1FRI} typiquement entre 1200°C et 1600°C ;
- maintien de la température cible T_{1FRI} entre 1 et 5min
- profil de descente en température situé entre 25°C à 100 °C/min après la phase de frittage ;
- pression de frittage P_{1FRI} est comprise entre 40 MPa et 80 MPa ;
- courants entre 3000 à 4000 Ampères
- tension entre 5 et 10 Volts

L'étape d'usinage S3 consiste à usiner la préforme PF, notamment par meulage, par laser, par fraisage, par tournage et/ou par jet d'eau afin d'obtenir une ébauche E s'apparentant à la forme de la pièce aux dimensions finales. Les dimensions de l'ébauche E doivent néanmoins être déterminées afin de prendre en compte la perte de volume se produisant au cours du second cycle de frittage. Cette perte de volume résulte de la densification de la matière et ne résulte donc pas d'une perte de liant en raison de la simple absence de ce dernier. Cette perte de volume est généralement comprise entre 2 et 20%, typiquement entre 5 et 10% du volume de la pièce usinée. Ainsi, l'ébauche E doit être usinée de sorte à présenter un volume d'au plus un cinquième, de préférence un dixième, voire un vingtième supérieur à celui de la carrure aux dimensions finales.

L'étape d'usinage S3 est suivie d'une étape S4 consistant à placer dans le moule M, l'ébauche E entourée d'une poudre sacrificielle PS. On réalise donc une immersion complète de l'ébauche dans une poudre sacrificielle PS disposée au sein du moule, avant d'entreprendre un second cycle de frittage SPS dont l'objectif est de conférer à la pièce les propriétés mécaniques souhaitées, notamment en termes de dureté et de ténacité. Cette poudre sacrificielle PS permet notamment de créer un volume homogène afin de transmettre la pression et la chaleur sur l'ensemble de l'ébauche E de manière uniforme au cours du second cycle de frittage et de soutenir celle-ci sans provoquer de déformation pouvant résulter de contraintes thermiques au cours de ce second cycle.

Dans un mode de réalisation préféré, on dispose au fond du moule une première couche de poudre sacrificielle C_{PS1} dont l'épaisseur est de préférence comprise entre 0.5 et 5mm, de préférence entre 1mm et 2mm. L'ébauche E est ensuite placée dans le moule sur cette première couche et les espaces vides sont ensuite remplis de poudre sacrificielle jusqu'à recouvrir intégralement l'ébauche et former au-dessus de cette dernière une seconde couche de poudre sacrificielle C_{PS2} d'épaisseur similaire à la couche située sous l'ébauche.

De préférence, la poudre sacrificielle PS respectera certaines propriétés spécifiques, notamment pour pouvoir résister aux températures élevées sans fritter elle-même. Par ce biais, cette poudre sacrificielle ne collera ou ne fusionnera pas avec l'ébauche E et évitera toute adhésion à la pièce ou au moule M pour en faciliter son retrait après le frittage. La poudre sacrificielle PS peut par exemple être choisie parmi des poudres réfractaires, la silice amorphe, du carbure de silicium ou une combinaison d'au moins une partie de ces composants.

Préalablement au second cycle de frittage S5, le moule rempli est placé dans la chambre de frittage SPS selon la représentation schématique illustrée par la figure 2. Il doit être positionné sur la platine ou le support de la machine SPS de manière à garantir un contact optimal avec les électrodes. Le moule peut être monté sur un support qui permet de le maintenir stable pendant le processus de frittage.

L'étape S4 est suivie d'une étape S5 consistant à réaliser un second cycle de frittage SPS dont les paramètres sont déterminés pour obtenir les propriétés mécaniques souhaitée de la carrure. Ces propriétés mécaniques sont obtenues dans le contexte de la présente invention pour une céramique à base de zircone stabilisé ayant de préférence une ou plusieurs des propriétés suivantes : densité : supérieure à 6 g/cm³, porosité : inférieure à 0.5%.

Les paramètres du second cycle de frittage S5 peuvent comprendre notamment les paramètres suivants :
- profil de montée en température situé entre 100°C/min et 150°C/min jusqu'à une température cible T_{2FRI} typiquement entre 1200°C et 1600°C ;
- maintien de la température cible T_{2FRI} entre 5 et 20min
- profil de descente en température situé entre 25°C à 100 °C/min après la phase de frittage ;
- pression de frittage P_{2FRI} est comprise entre 40 MPa et 80 MPa ;
- courants entre 3000 à 4000 Ampères
- tension entre 5 et 10 Volts

La pression de frittage P_{2FRI} est réalisée en actionnant les deux pistons Pis1, Pis2 contre respectivement la couche supérieure et la couche inférieure de poudre sacrificielle.

Une fois le second cycle de frittage S5 réalisé, l'ébauche est retirée du moule M et est nettoyée de tout résidu de poudre pour garantir la propreté de l'ébauche.

En fonction des conditions atmosphériques, des matériaux utilisés, et des paramètres de frittage, il se peut que le procédé de frittage SPS induise en réaction une réduction chimique. En particulier, dans un environnement de vide ou d'atmosphère inerte, il peut y avoir une réduction partielle de certains oxydes, car l'oxygène est évacué.

Bien que pour la zircone stabilisée, la réduction complète est peu probable dans des conditions normales de frittage SPS, compte tenu de sa stabilité thermodynamique, celle-ci comporte un ou plusieurs oxydes métalliques qui peuvent se trouver à l'état réduit ou partiellement réduit conférant à la pièce des couleurs ternes.

Dans ce cas, le second cycle de frittage peut être avantageusement suivi d'une opération de réoxydation S6 permettant une réoxydation des oxydes métalliques conférant ainsi à la carrure des zones de couleurs vives en fonction du type et de la teneur des oxydes métalliques présents.

L'opération de réoxydation se déroule généralement dans une atmosphère riche en oxygène, souvent en utilisant de l'air ou de l'oxygène pur. Si la réoxydation doit être plus contrôlée, une atmosphère partiellement oxydante (comme un mélange d'oxygène et d'argon) peut être utilisée pour éviter des oxydations excessives ou la formation d'oxydes secondaires. La carrure est chauffée dans un four ou un système de traitement thermique à une température suffisamment élevée pour faciliter la diffusion de l'oxygène dans la carrure. Les températures de réoxydation varient en fonction du type des oxydes métalliques présents dans la carrure mais se situent en général entre 800°C et 1'500°C.

Ainsi, après l'opération de réoxydation S6, l'aspect visuel de la carrure présente une ou plusieurs couleurs sur différentes zones en fonction du type, de la teneur et de la répartition des oxydes métalliques au sein de la céramique. La carrure peut par exemple présenter une zone possédant une teinte rougeâtre pour l'oxyde de cérium, une zone avec du vert ou du bleu brillant pour l'oxyde de cuivre et des bleus, ou une zone possédant une teinte violette pour l'oxyde de manganèse.

Une opération de rectification S7 est ensuite réalisée sur la carrure afin que celle-ci adopte les dimensions finales souhaitées. Etant donné que les dimensions de l'ébauche E, densifiée à sa valeur finale après le second cycle de frittage S5, sont proches des dimensions finales, l'opération de rectification s'en trouve significativement écourtée et peut typiquement être réalisée essentiellement par fraisage ou par meulage. Dans le contexte du présent procédé, l'étape de rectification S7 peut en outre comporter des opérations marginales d'usinage complémentaires sur la pièce de densité finale, notamment pour réaliser, dans le cas d'une carrure, l'ouverture pour le passage de la tige de la couronne et des trous de corne pour recevoir les extrémités d'une barrette d'un brin de bracelet.

Selon une forme de réalisation, une opération de décoration S8 peut être réalisée après l'étape de rectification afin d'obtenir la pièce finale 10. Cette opération, qui est optionnelle, consiste à réaliser sur une ou plusieurs régions de la carrure au niveau de la surface de la pièce, en particulier sur le flanc de la carrure, une décoration par une opération mécanique. L'opération mécanique peut être notamment un polissage, un sablage, un satinage du type rectiligne, circulaire ou colimaçon, un microbillage, un guillochage, un perlage, une finition côte de Genève ou une gravure main.

Selon une variante d'exécution, l'opération de réoxydation peut se faire après l'opération de rectification S7 et avant ou après l'opération de décoration S8.

Bien que le procédé ait été décrit principalement pour la fabrication d'une carrure de montre en céramique technique, le procédé peut être appliqué à d'autres pièces en céramique, en particulier à tout composant horloger d'habillage ou de mouvement, sans s'écarter de l'invention telle que définie par les revendications. Ce procédé peut par exemple être appliqué à tout type de composant horloger, notamment à des composants d'un mouvement de montre destinés à être visibles côté fond d'une boite de montre à travers une glace saphir, ou à des composants d'habillage.

## Revendications

1. Procédé pour la fabrication d'une pièce en céramique technique (10), comportant les étapes suivantes :
i) une étape (S1) consistant à déposer dans un moule (M) une composition à base d'au moins une poudre de céramique (P1 ; P2....Pn) et d'au moins un oxyde métallique en poudre;
ii) une étape (S2) consistant à réaliser un premier cycle de frittage SPS permettant d'obtenir une préforme (PF) d'une densité inférieure à une densité finale de la pièce en céramique technique (10) pour faciliter un usinage subséquent de ladite préforme (PF) ;
iii) une étape (S3) consistant à réaliser au moins une opération d'usinage de la préforme (PF) afin d'obtenir une ébauche (E) ;
iv) une étape (54) consistant à placer dans ledit moule (M) l'ébauche (E) et à l'entourer d'une poudre sacrificielle (PS) jusqu'à combler tout espace vide au sein du moule;
v) une étape (S5) consistant à réaliser un second cycle de frittage SPS permettant d'obtenir l'ébauche (E) avec ladite densité finale, et
vi) une étape (S7) consistant à rectifier l'ébauche (E) de densité finale afin d'obtenir ladite pièce en céramique technique (10) aux dimensions finales, et
dans lequel la composition de la poudre sacrificielle (PS) est choisie afin de ne pas adhérer à l'ébauche (E) au cours du second cycle de frittage.

2. Procédé selon l'une des revendications précédentes, dans lequel l'ébauche avant le second cycle de frittage SPS est au plus un cinquième, de préférence un dixième, voire un vingtième de fois plus volumineuse que la pièce en céramique technique (10).

3. Procédé selon l'une des revendications précédentes, dans lequel la préforme (PF) obtenue après le premier cycle de frittage comporte une porosité comprise dans une plage allant de 25 à 50%.

4. Procédé selon l'une des revendications précédentes, dans lequel ladite composition comporte un ou plusieurs oxydes sélectionnés parmi l'oxyde de fer, l'oxyde d'aluminium, l'oxyde de bismuth, l'oxyde de cuivre, l'oxyde de cérium, l'oxyde de zinc, l'oxyde de titane, l'oxyde de manganèse, l'oxyde de cobalt, l'oxyde de nickel, l'oxyde de chrome, l'oxyde d'europium, l'oxyde d'étain, l'oxyde de silicium, l'oxyde de vanadium, l'oxyde de néodyme, l'oxyde de praséodyme, l'oxyde d'hafnium, l'oxyde de calcium et l'oxyde d'yttrium, ou au moins l'une quelconque combinaison de ces oxydes.

5. Procédé selon l'une des revendications 1 à 3, dans lequel la préforme obtenue après le premier cycle de frittage comporte une densité comprise dans une plage allant de 4 à 6 g/cm³.

6. Procédé selon l'une des revendications précédentes, dans lequel la poudre sacrificielle possède une température de frittage au moins supérieure de 100°C par rapport à la température de frittage moyenne de ladite composition.

7. Procédé selon l'une des revendications précédentes, dans lequel l'ébauche est placée dans le moule sur une première couche de poudre sacrificielle et est totalement recouverte d'une seconde couche de ladite poudre sacrificielle, chacune desdites première et seconde couches ayant une épaisseur comprise entre 0.5 et 5mm, de préférence entre 1 et 2mm.

8. Procédé selon l'une des revendications précédentes, dans lequel la poudre sacrificielle est choisie parmi l'oxyde d'alumine, la silice amorphe ou une combinaison d'oxyde d'alumine et de silice amorphe, ou encore d'une poudre réfractaire dont la température de frittage se situe au-delà des 2000°C.

9. Procédé selon l'une des revendications précédentes, dans lequel ladite composition déposée dans le moule (M) forme un arrangement inhomogène de poudres.

10. Procédé selon l'une des revendications précédentes, dans lequel l'ébauche (E) de densité finale subit en outre une étape visant à réaliser une ou plusieurs opérations marginales d'usinage complémentaires.

11. Procédé selon l'une des revendications précédentes, dans lequel l'étape (S7) consistant à rectifier l'ébauche (E) est réalisée par fraisage, par meulage, par outils diamantés, par laser et/ou par jet d'eau.

12. Procédé selon l'une des revendications précédentes, comportant en outre une étape (S6) de réoxydation de l'ébauche (E) réalisée entre l'étape (S5) consistant à réaliser le second cycle de frittage et l'étape (S7) de rectification ou après ladite étape (S7) de rectification.

13. Composant horloger, notamment d'habillage tel qu'une carrure, une lunette, un bracelet ou un fond, obtenu par le procédé selon l'une des revendications précédentes.

14. Pièce d'horlogerie comprenant un composant horloger selon la revendication précédente.
